# EUROPEAN PATENT SPECIFICATION

(11) **EP 3 279 449 B1**
(45) Date of publication and mention of the grant of the patent: **28.10.2020**
(21) Application number: 17181086.4
(22) Date of filing: 12.07.2017
(51) Int. Cl.: F02C 7/277

(54) **AIR TURBINE STARTER WITH INTEGRATED MOTOR FOR MAIN ENGINE COOLING**
LUFTTURBINENSTARTER MIT INTEGRIERTEM MOTOR FÜR HAUPTMOTORKÜHLUNG
DÉMARREUR DE TURBINE À AIR AVEC MOTEUR INTÉGRÉ DE REFROIDISSEMENT DE MOTEUR PRINCIPAL

(30) Priority: 01.08.2016 US 201615225145
(43) Date of publication of application: 07.02.2018
(73) Proprietor: Honeywell International Inc., Morris Plains, NJ 07950 (US)
(72) Inventor: MATHIS, Dave, Morris Plains, NJ New Jersey 07950 (US); BUSH, Mike, Morris Plains, NJ New Jersey 07950 (US); MAALOUF, Jason G., Morris Plains, NJ New Jersey 07950 (US); KROEGER, James, Morris Plains, NJ New Jersey 07950 (US)
(74) Representative: Houghton, Mark Phillip

(56) References cited:
- EP-A1- 3 205 847
- EP-A1- 3 205 860
- GB-A- 1 229 203
- US-A1- 2009 199 567

## Description

### TECHNICAL FIELD

The present disclosure generally relates to an engine system with an air turbine starter and, more particularly, relates to an air turbine starter with an integrated motor for main engine cooling.

### BACKGROUND

An engine, such as a gas turbine engine, will generate heat due to combustion, friction, and/or other causes. This heat may be transferred through the various parts of the engine during operation. In some instances (e.g., after and/or during shutdown of the engine), a heat gradient may develop between different areas of the engine. For example, one or more rotating parts of the engine may cool unevenly after engine shutdown. Ultimately, this may decrease the efficiency of the engine and/or cause other undesireable effects.

Accordingly, it is desirable to provide a device that allows the engine to cool substantially evenly and to avoid substantial temperature gradients. It is also desirable that the device be lightweight and compact. Other desirable features and characteristics of the present disclosure will become apparent from the subsequent detailed description and the appended claims, taken in conjunction with the accompanying drawings and the foregoing technical field and background.

GB1229203 discloses a gas turbine starter 10 with a combustion section used for driving rotation of a gas generator turbine 34 for starting an engine 1. See page 2, lines 41-59. The gas turbine starter 10 is started by an electric motor (not shown). Page 1, lines 75-76. However, once started, the combustion section rotates the turbine 34. Thus, this reference is not directed to an air turbine starter. Also, there is no teaching or suggestion that the electric motor is attached to a ring gear of a planetary gearset of the gas turbine starter 10.

### BRIEF SUMMARY

The present invention is defined by the appended claims.

In one embodiment, an air turbine starter for a main engine includes a support structure and an airflow passage extending at least partially through the support structure. The air turbine starter also includes a turbine that is supported by the support structure for rotation relative to the support structure. The turbine is configured to be driven in rotation due to air flowing through the airflow passage. The air turbine starter additionally includes a gear train that is operably coupled to the turbine and configured for receiving turbine torque input from the turbine. The plurality of gears includes an integrated input gear. The air turbine starter further includes an output member that is supported by the support structure for rotation relative to the support structure. The output member is operably coupled to the gear train and a main engine input member. The output member is configured to transfer torque from the gear train to the main engine input member. Additionally, the air turbine starter includes a motor system that is supported by the support structure. The motor system includes a motor and a motor output gear. The motor output gear is configured to engage the integrated input gear for selectively delivering motor torque from the motor to the integrated input gear such that the motor torque is transferred to the output member and delivered to the main engine input member.

In another embodiment, an engine system includes an engine and an air turbine starter that includes a gear train that is operably coupled to the engine. The gear train includes an input gear. The air turbine starter is configured to receive input air, and the input gear is configured to rotate as a result of the flow of the input air to move at least one part of the engine. The engine system further includes a motor and a motor output gear that is rotated by the motor. The motor and motor output gear are configured to selectively drive and rotate the input gear of the gear train to move the at least one part of the engine.

### BRIEF DESCRIPTION OF THE DRAWINGS

The present disclosure will hereinafter be described in conjunction with the following drawing figures, wherein like numerals denote like elements, and wherein:
FIG. 1 is an environmental view of an engine system that includes a main engine and an air turbine starter according to exemplary embodiments of the present disclosure;
FIG. 2 is a cross-sectional view of the air turbine starter taken along the line 2-2 of FIG. 1, wherein the air turbine starter includes an integrated motor according to exemplary embodiments of the present disclosure; and
FIG. 3 is a cross-sectional view of the integrated motor according to additional embodiments of the present disclosure.

### DETAILED DESCRIPTION

The following detailed description is merely exemplary in nature and is not intended to limit the present disclosure or the application and uses of the present disclosure. Furthermore, there is no intention to be bound by any theory presented in the preceding background or the following detailed description. In addition, those skilled in the art will appreciate that embodiments of the present disclosure may be practiced in conjunction with any type of device that would benefit from an air turbine starter with an integrated motor for cooling of a main engine. It will also be appreciated that the air turbine starter and the integrated motor described herein is merely exemplary and configured according to the present disclosure. Moreover, the integrated motor may be used with an air turbine starter for a gas turbine engine that is onboard a mobile platform or vehicle (e.g., an aircraft, a bus, motorcycle, train, motor vehicle, marine vessel, rotorcraft and the like). The various teachings of the present disclosure may also be used with an air turbine starter and/or a gas turbine engine associated with a stationary platform.

As used herein, the term module refers to any hardware, software, firmware, electronic control component, processing logic, and/or processor device, individually or in any combination, including without limitation: application specific integrated circuit (ASIC), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the ATS vehicle system described herein is merely one exemplary embodiment of the present disclosure

For the sake of brevity, conventional techniques related to signal processing, data transmission, signaling, control, and other functional aspects of the systems (and the individual operating components of the systems) may not be described in detail herein.

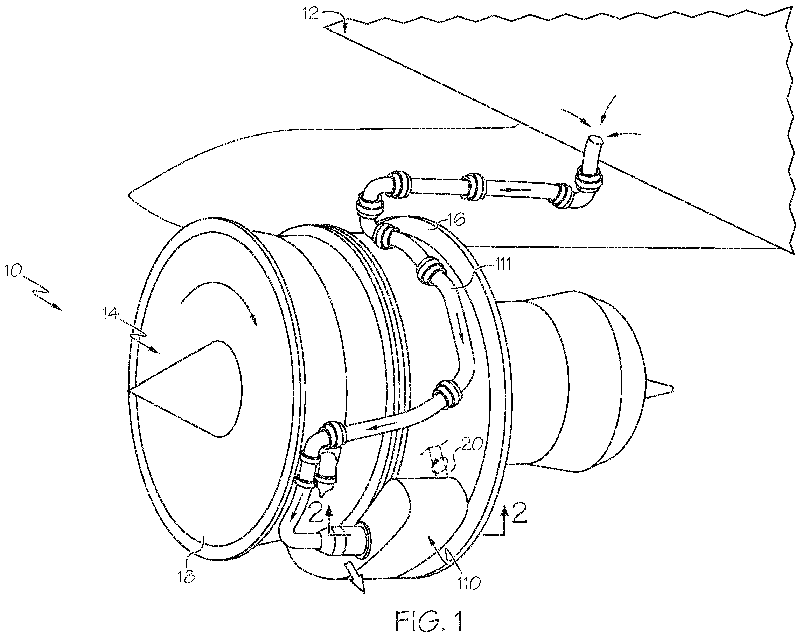

Referring now specifically to the drawings, FIG. 1 illustrates an engine system 10 according to exemplary embodiments. The engine system 10 may be mounted to a vehicle 12, such as an aircraft, in some embodiments.

In the illustrated embodiment, the engine system 10 generally includes a main engine 14 and an air turbine starter 110 (ATS). The main engine 14 may be a gas turbine engine in some embodiments. The ATS 110 is used to move one or more parts of the main engine 14, for example, when starting the main engine 14. More specifically, operation of the ATS 110 causes movement of one or more parts of the main engine 14 before combustion occurs within the main engine 14. In some embodiments, the ATS 110 may continue to provide input to the main engine 14 after initial combustion until a shut off signal is sent to the ATS 110. Then, the main engine 14 drives movement of its parts, without input from the ATS 110. These and other operations of the engine system 10 will be discussed in detail below.

In some embodiments, the main engine 14 includes a support structure 16 that is connected to the vehicle 12 and that supports a plurality of moveable parts 18 therein. The support structure 16 may include various parts that remain static relative to the vehicle 12, whereas the moveable parts 18 move relative to the support structure 16 and the vehicle 12. The moveable parts 18 may include one or more rotors, blades, shafts, etc. The moveable parts 18 also include a main engine input member 20 (shown in phantom in FIG. 1). The main engine input member 20 may be an elongate shaft that is rotatable and may be supported by a starter pad on the gearbox of the main engine 14. The main engine input member 20 connects to (i.e., engages, couples with, etc.) an output member of the ATS 110 as will be explained in detail below. Accordingly, torque output from the ATS 110 may be transferred to the main engine input member 20.

During operation of the ATS 110 (e.g., during startup of the main engine 14), air flows via an input tube 111 into the ATS 110. As will be discussed in detail, this air input rotatably drives one or more parts inside the ATS 110. Resultant torque from the ATS 110 transfers to the main engine input member 20, and the torque transfers from the main engine input member 20 to the other moveable parts 18 of the main engine 14 (e.g., the rotors, blades, and shafts of the main engine 14). The ATS 110 increases the angular velocity of the moveable parts 18 from a stopped position to a so-called "combustion speed" or "light-off speed". At this point, combustion occurs in the main engine 14, thereby further increasing the angular velocity of the moveable parts 18 to a so-called "operational speed" or "cutout speed". Airflow to the ATS 110 through the ATS input tube 111 ceases the main engine 14 reaches operational or cutout speed, and the main engine 14 operates independently of the ATS 110 until shutdown. Then, at shutdown of the main engine 14, the moveable parts 18 of the main engine 14 slow down and eventually stop.

As will be discussed, the ATS 110 includes components that may be used during shutdown (or any time before the next start of the main engine 14) to keep the moveable parts 18 of the main engine 14 moving. This can help the main engine 14 to cool more evenly as compared to main engines of the prior art.

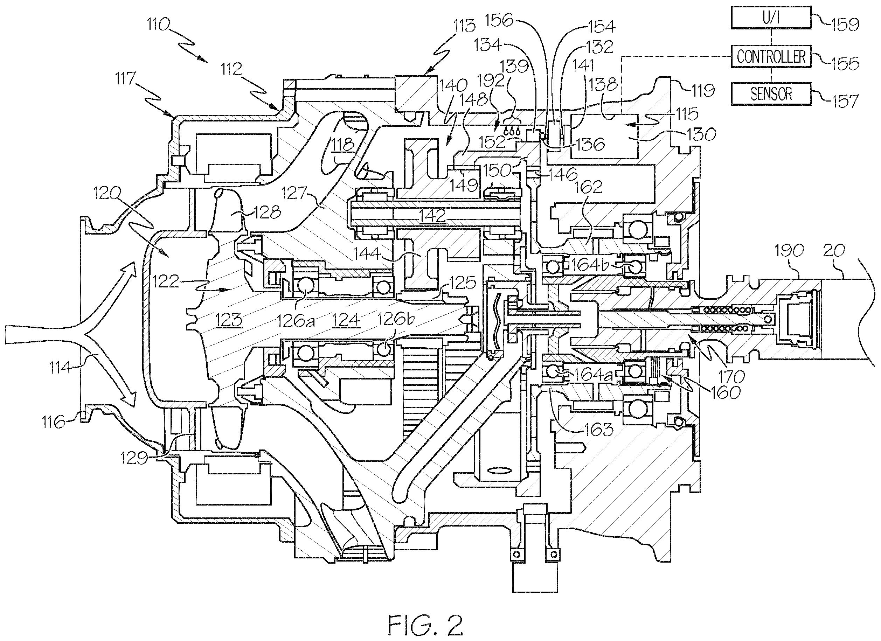

Specifically, in some embodiments, the ATS 110 includes an integrated motor system 115 (FIG. 2) used for cooling of the main engine 14. As will be discussed, torque output from the integrated motor system 115 can transfer through parts of the ATS 110 to the main engine input member 20 to keep the moveable parts 18 of the main engine 14 moving. In some embodiments, the integrated motor system 115 may take advantage of the existing torque path of the ATS 110 (and, in some embodiments, the gear reduction and/or clutch of the ATS 110). Accordingly, the integrated motor system 115 can be lightweight, compact, and inexpensive to incorporate into the engine system 10.

Referring now to FIG. 2, the ATS 110 will be discussed in detail according to exemplary embodiments of the present disclosure. As shown, the ATS 110 may include a support structure 117, which attaches to the main engine 14 and/or the vehicle 12. The support structure 117 may include a first housing assembly 112 and a second housing assembly 113. The first housing assembly 112 defines a flow path 114 extending from an inlet 116 to an outlet 118 through the support structure 117. The ATS input tube 111 (FIG. 1) may be fluidly connected to the inlet 116 to supply air thereto. The second housing assembly 113 may include a mounting flange 119 for mounting the ATS 110 to the support structure 16 of the main engine 14 (FIG. 1).

Within the ATS 110, the housing assemblies 112, 113 support a turbine section 120, a gear train 140, and an overrunning clutch 160. The first housing assembly 112 substantially houses the turbine section 120 and defines the flow path 114. The second housing assembly 113 substantially houses the gear train 140 and the overrunning clutch 160. Specific details of the turbine section 120, gear train 140, and overrunning clutch 160 are explained below.

The turbine section 120 may include a turbine 122 having a wheel 123 and a rotatable shaft 124 extending therefrom. The turbine 122 is supported (i.e., journaled) by bearings 126a, 126b for rotation relative to a turbine exhaust housing 127, which is part of the first housing assembly 112. A plurality of turbine blades 128 are circumferentially mounted to the wheel 123 and are positioned within the flow path 114. Upstream of the blades 128 are a plurality of nozzles 129 mounted to the inlet 116 which provide the proper flow angle to the air flow before it flows to the turbine blades 128. In operation, pressurized air entering through inlet 116 is properly aligned by the nozzles 129 and is then expanded across the blades 128 before exiting through outlet 118. The blades 128 convert the pressure energy of the air into rotary motion, causing the wheel 123 and the shaft 124 of the turbine 122 to rotate at the same speed as the blades 128.

In some embodiments, the gear train 140 is a compound planetary gear train 140 that is operably coupled to the turbine 122 and configured for receiving turbine torque input from the turbine 122. More specifically, the gear train 140 includes a sun gear 125, which is fixed to the shaft 124 for rotation therewith. The gear train 140 also includes a plurality of planetary gears 144, each supported by a respective shaft 142. The planetary gears 144 may be enmeshed with the sun gear 125. The gear train 140 may also include a ring gear 148, which surrounds and supports the planetary gears 144. A first inner diameter part 149 of the ring gear 148 enmeshes with the planetary gears 144. The gear train 140 may also include a hub gear 162, which is enmeshed with a second inner diameter part 146 of the ring gear 148. The hub gear 162 may be considered an input side of the overrunning clutch 160.

In operation, torque may transfer through the gear train 140 from the shaft 124 to the clutch 160. Specifically, the sun gear 125 rotates with the shaft 124, and torque travels from the sun gear 125, through the planetary gears 144, through the ring gear 148, and to the hub gear 162. The gear train 140 also provides a predetermined gear ratio or gear reduction. Accordingly, the gear train 140 converts the high speed, low torque output of the turbine section 120 into low speed, high torque input for the clutch 160.

In some embodiments, the clutch 160 is a sprag type clutch, although other clutch mechanisms may be used. The clutch 160 includes the hub gear 162 on its input side and a clutch output member 170 on its output side. The hub gear 162 includes a hollow cylindrical hub portion 163, which is supported on bearings 164a, 164b. The clutch output member 170 is supported for rotation relative to the support structure 117 and may include a shaft decoupler assembly 190 splined into the inner race of the bearings 164a, 164b. The clutch output member 170 is coupled to the main engine input member 20. In operation, when the clutch 160 is in its clutched position, the clutch 160 delivers torque from the hub gear 162 to the main engine input member 20, for example, during startup of the main engine 14. The clutch 160 also has an unclutched position, preventing torque from transferring back from the main engine input member 20 to the hub gear 162. This can occur, for example, once combustion begins in the main engine 14 and the main engine input member 20 begins to rotate faster than the hub gear 162.

The ATS 110 also includes the integrated motor system 115. As will be discussed, the integrated motor system 115 selectively delivers torque to the main engine input member 20. In some embodiments, the integrated motor system 115 is used after shutdown of the main engine 14, for example, to provide substantially even cooling of the main engine 14.

The integrated motor system 115 includes a motor 130 with a motor output shaft 132. In some embodiments, the motor 130 may be an electric motor, such as a two-kilowatt motor able to output approximately 10,000 RPMs. However, it will be appreciated that the motor 130 can be of other types without departing from the scope of the present disclosure.

The motor 130 may be received in a motor cavity 138, which is defined within the second housing assembly 113 of the ATS 110. The motor output shaft 132 may extend away from the motor 130 and out of the motor cavity 138 such that the motor output shaft 132 extends toward the gear train 140 of the ATS 110.

The motor system 115 also includes a motor output gear 134, which is driven in rotation by the motor output shaft 132. In some embodiments, the motor output gear 134 is a spur gear. However, it will be appreciated that the motor output gear 134 may be a helical gear, a bevel gear, or other type of gear without departing from the scope of the present disclosure. The motor output gear 134 engages and meshes with the gear train 140 of the ATS 110 as will be discussed in greater detail below.

Additionally, the integrated motor system 115 may include a motor gear train 136, which is illustrated schematically in FIG. 2. The motor gear train 136 of the integrated motor system 115 may include a plurality of gears that are operably connected in series between the motor output shaft 132 and the motor output gear 134. In some embodiments, the motor gear train 136 may be configured such that the motor output shaft 132 and the motor output gear 134 have substantially parallel axes of rotation. In operation, the motor gear train 136 may provide a predetermined gear reduction between the motor output shaft 132 and the motor output gear 134. As such, the motor gear train 136 may convert the relatively high speed, low torque output of the motor output shaft 132 to the relatively low speed, high torque rotation of the motor output gear 134. It will be appreciated that the motor gear train 136 is optional and that, in other embodiments, the motor 130 may directly rotate the motor output gear 134. Specifically, the motor output gear 134 may be attached to the motor output shaft 132 so that the motor output gear 134 and the motor output shaft 132 rotate at the same speed.

The motor output gear 134 may engage the gear train 140 of the ATS 110 such that torque output from the motor 130 is transferred through at least part of the gear train 140 to the main engine input member 20. In some embodiments, the motor output gear 134 may be engaged to a portion of the ring gear 148 of the gear train 140. Specifically, in the embodiment of FIG. 2, an outer diameter part 152 of the ring gear 148 includes outwardly projecting gear teeth that mesh with opposing gear teeth of the motor output gear 134. Thus, the outer diameter part 152 of the ring gear 148 may be referred to as an "integrated input gear 150" that receives torque input from the integrated motor system 115. It will be appreciated, however, that another part of the gear train 140 of the ATS 110 may serve as the integrated input gear 150 for receiving torque input from the integrated motor system 115 without departing from the scope of the present disclosure. The ring gear 148 may also be referred to as a "combination gear" in that it both: (1) transfers torque input from the turbine 122 to the main engine input member 20 in some scenarios; and (2) transfers torque input from the integrated motor system 115 to the main engine input member 20 in other scenarios.

The integrated motor system 115 may additionally include a motor clutch 154 in some embodiments. The motor clutch 154 may be an overrunning clutch or a sprag clutch in some embodiments. The motor clutch 154 may be supported on the motor output shaft 132 in some embodiments. In additional embodiments, the motor clutch 154 may be supported on the same shaft as the motor output gear 134. The motor clutch 154 is configured to provide one-way torque transfer from the motor 130 to the ring gear 148. In other words, the motor clutch 154 can have a clutched position, in which motor torque from the motor 130 causes the motor output gear 134 to rotate the ring gear 148. However, if the ring gear 148 is rotating faster than the motor output gear 134, the motor clutch 154 can move to an unclutched position to prevent torque from the ring gear 148 from travelling back toward the motor 130.

Moreover, the integrated motor system 115 may include a frangible member 156. The frangible member 156 may be referred to as a "shear section." The frangible member 156 may be incorporated within the motor output shaft 132 in some embodiments. The frangible member 156 may have a predetermined fracture strength. In some embodiments, for example, the frangible member 156 may be a thinned area of the motor output shaft 132 that has a lower fracture strength compared to other areas along the torque path of the motor system 115. If torque or other force on the frangible member 156 is below the predetermined fracture strength, then the frangible member 156 remains rigid (i.e., the frangible member 156 remains in a first configuration), allowing for torque transfer through the motor system 115. However, if the force on the frangible member 156 exceeds the predetermined fracture strength, then the frangible member 156 fractures (i.e., the frangible member 156 moves to a second, fractured configuration), preventing torque transfer through the motor system 115. The predetermined fracture strength can be significantly above (e.g., an order of magnitude above) the forces normally associated with torque transfer between the motor 130 and the gear train 140 of the ATS 110. Thus, the frangible member 156 may remain rigid during normal operations, and the frangible member 156 may fracture, for example, if the motor 130 jams or otherwise fails. Accordingly, the frangible member 156 may fracture to protect other parts of the motor system 115.

Additionally, in some embodiments, at least part of the integrated motor system 115 may be lubricated by the same lubricant 139 as the gear train 140 of the ATS 110. (The lubricant 139 is illustrated schematically in FIG. 2.) In some embodiments, the motor output gear 134, the motor gear train 136, and the motor clutch 154 are disposed in a cavity 192 within the second housing assembly 113, and the gear train 140 of the ATS 110 is housed within the same cavity 192. Accordingly, the lubricant 139 may commonly lubricate the motor output gear 134, the motor gear train 136, the motor clutch 154, as well as the ring gear 148 and other parts of the gear train 140. Furthermore, the integrated motor system 115 may include a seal 141 that substantially seals the motor 130 and/or other parts of the integrated motor system 115 from the lubricant 139. In some embodiments, the seal 141 may be an O-ring that substantially prevents the lubricant 139 from leaking from the cavity 192 into the motor cavity 138.

Furthermore, the integrated motor system 115 may include a controller 155. The controller 155 may include a processor, computerized memory, and/or other components of a computerized control system. The controller 155 generates control signals for controlling operation of the motor 130. The controller 155 may be configured to generate control signals and transmit those signals to the motor 130 for changing the speed of the motor between at least two speeds. In some embodiments, the controller 155 may be configured to turn the motor 130 ON and OFF (i.e., change the speed of the motor 130 from zero RPMs to a positive RPM value). In additional embodiments, the controller 155 may be configured to adjust the speed of the motor output shaft 132 between a plurality of predetermined set speeds (e.g., change the speed of the motor 130 between a first speed, a second speed, a third speed, and an nth-speed, each having different RPM values).

Moreover, the controller 155 may automatically control the motor 130 in some embodiments. In other embodiments, the integrated motor system 115 may allow user commands to be supplied to the controller 155 such that the user "manually" turns the motor 130 ON and OFF and/or varies the speed of the motor 130. In further embodiments, the controller 155 may be configured for automatic control of the motor 130 in some scenarios and manual control of the motor 130 in other scenarios.

The integrated motor system 115 may also include a user interface 159. The user interface 159 may include buttons, switches, a display, a speaker, and/or other instruments. The user interface 159 may be in communication (e.g., via wires and/or through wireless communication) with the controller 155. With the user interface 159, a user may supply input to the controller 155, and the controller 155 may generate and send corresponding control signals to the motor 130. The controller 155 may also generate and send control signals back to the user interface 159 for outputting information (e.g., via a display or speaker) to inform the user of the status of the integrated motor system 115. The user interface 159 may be provided in any suitable location, for example, within a cockpit of the vehicle 12.

Also, the integrated motor system 115 may include at least one sensor 157. The sensor 157 may be configured to observe a condition that necessitates use of the motor system 115. For example, in some embodiments, the sensor 157 is configured to observe that the main engine 14 has shut down. As a result, the sensor 157 outputs a corresponding signal to the controller 155, and the controller 155, in turn, outputs a control signal to the motor 130 to turn ON the motor 130.

Operations of the engine system 10 will now be discussed with reference to FIGS. 1 and 2. For purposes of discussion, the following sequence will be described: (1) startup of the main engine 14 using the ATS 110; (2) independent operation of the main engine 14; and 3) shutdown and cooling of the main engine 14 while using the integrated motor system 115. It will be appreciated that other operation sequences may be employed that fall within the scope of the present disclosure.

To begin startup of the main engine 14, air is supplied to the ATS 110 via the flow path 114. This air input pushes the turbine blades 128 to rotate the wheel 123 and shaft 124. Resultant torque transfers through the gear train 140 of the ATS 110 to the main engine input member 20 to rotate the movable parts 18 of the main engine 14. In some embodiments, air is continuously supplied to the ATS 110 until the speed of the movable parts 18 reach a predetermined speed. This speed may be referred to as a "combustion speed" or "lightoff speed".

Once the movable parts 18 of the main engine 14 reach combustion speed, fuel may continue to be injected into and combusted within combustion chambers of the main engine 14. The power of combustion increases the speed of the movable parts 18 to a so-called "operational speed" or "cutout speed" and allows the main engine 14 to operate independent of the ATS 110. Thus, air supplied to the flow path 114 of the ATS 110 may be cut off.

The main engine 14 may be operated independently for a desired time. Then, during shutdown of the main engine 14, fuel can be cut off to cease combustion in the main engine 14, causing the movable parts 18 to slow down. At a predetermined time, the integrated motor system 115 may be operated to keep the movable parts 18 rotating at a predetermined speed. Specifically, the controller 155 may turn the motor 130 ON to supply the resultant motor torque to the main engine input member 20.

In some embodiments, the sensor 157 observes a condition indicative of shutdown of the main engine 14, the sensor 157 sends a corresponding signal to the controller 155, and the controller 155 in turn sends a control signal to the motor 130 to automatically turn ON the motor 130. In other embodiments, a user provides input to the controller 155 via the user interface 159, and the controller 155 in turn sends a control signal to the motor 130 to manually turn ON the motor 130.

Torque generated by the motor 130 transfers to the motor output gear 134, and then to the ring gear 148. The ring gear 148 then, in turn, rotates the hub gear 162 of the clutch 160, and the torque is transferred to the main engine input member 20 for maintaining rotation of the movable parts 18 of the main engine 14. In some embodiments, the motor 130 may cause the movable parts 18 of the main engine 14 to rotate at a speed that is less than both the operational speed and the combustion speed of the main engine 14. The motor 130 may operate continuously for a predetermined period of time until the main engine 14 has sufficiently cooled. Then the controller 155 may turn the motor 130 OFF.

In additional scenarios, the motor 130 is operated during a startup procedure of the main engine 14. For example, the controller 155 may turn the motor 130 ON to rotate the movable parts 18 at a speed that is less than both the operational speed and the combustion speed. Then, air may be supplied to the ATS 110 such that the ATS 110 increases the speed of the movable parts 18 to the combustion (i.e., lightoff) speed. Next, the main engine 14 may be operated independent of the ATS 110.

It will be appreciated that the torque path from the motor 130 to the ring gear 148 of the ATS gear train 140 is substantially one-way in the illustrated embodiment. This is because the motor clutch 154 unclutches to prevents torque from travelling back from the ring gear 148 toward the motor 130 (e.g., during startup of the main engine 14).

Similarly, it will be appreciated that the torque path from the motor 130 to the main engine input member 20 is substantially one-way in the illustrated embodiment. This is because the ATS clutch 160 is disposed along the torque path between the motor 130 and the main engine input member 20. The ATS clutch 160 is disposed in its clutched position to transfer torque from the motor 130 to the main engine input member 20. On the other hand, the ATS clutch 160 moves to its unclutched position to prevent torque from travelling back from the main engine input member 20 toward the motor 130 (e.g., during combustion within the main engine 14).

Thus, the integrated motor system 115 may be used for providing substantially even cooling of the main engine 14. More specifically, the motor 130 maintains rotation of the movable parts 18 after shutdown such that heat is transferred evenly through the movable parts 18. As such, the main engine 14 is less likely to be damaged or deformed by temperature gradients.

Also, the motor system 115 may rely on at least part of the ATS gear train 140 for providing the predetermined gear reduction to the main engine input member 20. Likewise, the motor system 115 may rely on the ATS clutch 160 for providing one-way torque transfer to the main engine input member 20. Accordingly, the motor system 115 may be integrated into the ATS 110 in a compact and, yet, effective manner.

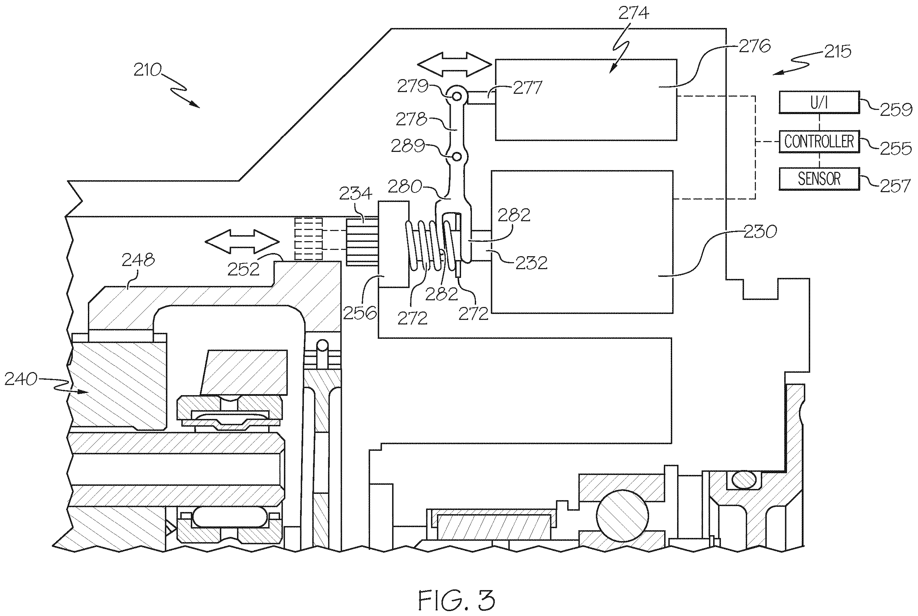

Referring now to FIG. 3, the integrated motor system 215 is illustrated according to additional embodiments. The embodiment of FIG. 3 may be substantially similar to the embodiment of FIG. 2, except as noted. Components in FIG. 3 that correspond to those of FIG. 2 are indicated with corresponding reference numbers, increased by 100.

The integrated motor system 215 may include a motor 230, which rotates and drives a motor output shaft 232. The motor system 215 may also include a motor output gear 234 and a frangible member 256, similar to the embodiments discussed above.

The motor output gear 234 may be moveable between a first position and a second position. In FIG. 3, the first position is shown in phantom, and the second position is shown in solid lines. In the first position, the motor output gear 234 engages the outer diameter part 252 of the ring gear 248 of the ATS gear train 240. In the second position, the motor output gear 234 is spaced apart from and disengaged from the ring gear 248. Accordingly, when the motor output gear 234 is in the first position, the motor output gear 234 is able to deliver torque from the motor 230 to the ring gear 248 of the ATS 210 (e.g., during main engine shutdown). On the other hand, when the motor output gear 234 is in the second position, torque is unable to be delivered from the motor 230 to the ring gear 248.

The integrated motor system 215 may also include an actuator 274 that is configured to move the motor output gear 234 between the first and second positions. In some embodiments, the actuator 274 is configured to move the motor output gear 234 substantially linearly between the first and second positions. For example, the actuator 274 may include a solenoid 276 with a shaft 277 and a pivot arm 278. The pivot arm 278 may include a first end 279 that engages the shaft 277. The pivot arm 278 may also include a second end 280 that includes at least one abutment member 282. The pivot arm 278 may be mounted to pivot about a pivot member 289. The abutment member 282 may engage one or more engagement members 272, which are included on the output shaft 232 of the motor 230.

The controller 255 may be operably connected to the motor 230 as well as the solenoid 276. The motor system 215 may also include the sensor 257 and the user interface 259 of the type discussed above.

Operation of the integrated motor system 215 will now be discussed according to exemplary embodiments. During startup of the main engine, the motor output gear 234 may be disposed in the second position, disengaged from the ring gear 248. Accordingly, torque from the ring gear 248 will not transfer to the motor output gear 234 during main engine startup. Also, during combustion and normal operations of the main engine, the motor output gear 234 may remain in the second position, disengaged from the ring gear 248. However, during shutdown of the main engine, the controller 255 may generate and send a control signal to the actuator 274 to move the motor output gear 234 to the first position to engage the ring gear 248. Specifically, in the illustrated embodiment, the controller 255 may send a control signal to the solenoid 276, which retracts the shaft 277 into the solenoid 276. Movement of the shaft 277 moves the first end 279 of the arm 278 and, thus, pivots the arm 278 about the pivot member 289. As the arm 278 pivots, the abutment members 282 push the engagement members 272 to ultimately move the output gear 234 linearly toward engagement with the ring gear 248 (i.e., toward the first position). With the output gear 234 in the first position, the motor 230 may be used to deliver torque to the main engine for engine cooling as discussed above. The controller 255 may also send control signals to the solenoid 276 for returning the output gear 234 to the second position so that output gear 234 disengages from the ring gear 248 once the main engine has sufficiently cooled.

The integrated motor system 215 of FIG. 3 may provide substantially even cooling for the main engine, similar to the embodiments of FIGS. 1 and 2. Also, the motor system 215 may be compact and, yet, effective for cooling purposes. Additionally, in some embodiments, the motor system 215 may not need a clutch (e.g., motor clutch 154) of the type discussed above with respect to FIG. 2. Instead, the actuator 276 may be relied upon for preventing torque from being transferred from the ring gear 248 toward the motor 230 (i.e., when the output gear 234 is in the second position). In other embodiments, the integrated motor system 215 may include a clutch (e.g., similar to the clutch 154 discussed above).

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the present disclosure in any way. Rather, the foregoing detailed description will provide those skilled in the art with a convenient road map for implementing an exemplary embodiment of the present disclosure. It is understood that various changes may be made in the function and arrangement of elements described in an exemplary embodiment without departing from the scope of the present disclosure as set forth in the appended claims.

## Claims

1. An air turbine starter (10) for a gas turbine engine (14), the gas turbine engine (14) including a gas turbine engine input member (20), the air turbine starter (10) comprising:
a support structure (117);
an airflow passage (114) extending at least partially through the support structure (117);
a turbine (122) that is supported by the support structure (117) for rotation relative to the support structure (117), the turbine (122) configured to be driven in rotation due to air flowing through the airflow passage (114);
a gear train (140) that is operably coupled to the turbine (122) and configured for receiving turbine torque input from the turbine (122), the gear train (140) comprising a planetary gear set that includes an integrated input gear (150);
an output member (170) that is supported by the support structure (117) for rotation relative to the support structure (117), the output member (170) being operably couplable to the gear train (140) and the gas turbine engine input member (20), the output member (170) being configured to transfer torque from the gear train (140) to the gas turbine engine input member (20); and
a motor system (115) that is supported by the support structure (117), the motor system (115) including a motor (130) and a motor output gear (134), the motor output gear (134) configured to engage the integrated input gear (150) for selectively delivering motor torque from the motor (130) to the integrated input gear (150) such that the motor torque is transferred to the output member (170) and delivered to the gas turbine engine input member (20);
wherein the integrated input gear (150) is a ring gear (148) of the planetary gear set of the gear train (140);
wherein the planetary gear set includes a plurality of planetary gears (144) that are engaged with an inner diameter part (149) of the ring gear (148); and
wherein the motor output gear (134) is configured to engage an outer diameter part (152) of the ring gear (148).

2. The air turbine starter (10) of claim 1, wherein the motor system (115) includes a motor clutch (154) configured to provide one-way torque transfer from the motor (130) to the integrated input gear (150).

3. The air turbine starter (10) of claim 1, wherein the motor output gear (134) is moveable between a first position and a second position;
wherein, in the first position, the motor output gear (134) is engaged with the integrated input gear (150) for selectively delivering motor torque to the integrated input gear (150);
wherein, in the second position, the motor output gear (134) is disengaged from the integrated input gear (150); and
further comprising an actuator (274) configured to selectively move the motor output gear (134) between the first position and the second position.

4. The air turbine starter (10) of claim 3, wherein the actuator (274) includes a solenoid (276).

5. The air turbine starter (10) of claim 1, wherein the motor system (115) includes a frangible member (156);
wherein the frangible member (156) has a first configuration when a load on the frangible member (156) is below a predetermined threshold, allowing torque transfer through the motor system (115); and
wherein the frangible member (156) has a second, fractured configuration when the load on the frangible member (156) is above the predetermined threshold, preventing torque transfer through the motor system (115).

6. The air turbine starter (10) of claim 1, further comprising a lubricant (139) contained within the support structure (117);
and wherein the integrated input gear (150) and at least a part of the motor system (115) are commonly lubricated by the lubricant (139).

7. The air turbine starter (10) of claim 6, wherein the at least a part of the motor system (115) is a first part of the motor system (115); and
further comprising a seal (141) that substantially seals a second part of the motor system (115) from the lubricant (139).

8. The air turbine starter (10) of claim 1, wherein the motor system (115) includes a motor shaft (132) that is rotatably driven by the motor (130), and wherein the motor system (115) includes a motor gear train that provides a predetermined gear reduction between the motor shaft (132) and the motor output gear (134).

9. The air turbine starter (10) of claim 1, wherein the support structure (117) includes a first support structure (112) that defines the airflow passage (114) and a second support structure (113) that substantially houses the gear train (140); and
wherein the motor system (115) is mounted to the second support structure (113).

10. The air turbine starter (10) of claim 1, wherein the motor (130) is an electric motor.

11. The air turbine starter (10) of claim 1, wherein the motor system (115) is configured to define a torque path between the motor (130) and the gas turbine engine input member (20);
further comprising an ATS clutch (160) disposed along the torque path between the motor (130) and the gas turbine engine input member (20); and
wherein the ATS clutch (160) is configured to provide one-way torque transfer from the motor (130) to the gas turbine engine input member (20).

12. The air turbine starter (10) of claim 1, further comprising a controller (155) that is in operable communication with the motor (130);
wherein the controller (155) is configured to generate a control signal and transmit the control signal to the motor (130) for changing the speed of the motor (130) between at least two speeds.

13. An engine system comprising:
a gas turbine engine; and
the air turbine starter (10) of claim 1.

## Patentansprüche

1. Luftturbinenstarter (10) für ein Gasturbinentriebwerk (14), wobei das Gasturbinentriebwerk (14) ein Gasturbinentriebwerkseingangselement (20) einschließt, wobei der Luftturbinenstarter (10) umfasst:
eine Stützstruktur (117);
einen Luftströmungsdurchgang (114), der sich zumindest teilweise durch die Stützstruktur (117) erstreckt;
eine Turbine (122), die von der Stützstruktur (117) zur Drehung in Bezug auf die Stützstruktur (117) getragen wird, wobei die Turbine (122) ausgelegt ist, um aufgrund von Luft, die durch den Luftströmungsdurchgang (114) strömt, in Drehung angetrieben zu werden;
einen Getriebezug (140), der funktionsfähig mit der Turbine (122) gekoppelt ist und zum Empfangen des Turbinendrehmomenteingangs von der Turbine (122) ausgelegt ist, wobei der Getriebezug (140) einen Planetenradsatz umfasst, der ein integriertes Eingangszahnrad (150) einschließt;
ein Ausgangselement (170), das von der Stützstruktur (117) zur Drehung in Bezug auf die Stützstruktur (117) getragen wird, wobei das Ausgangselement (170) funktionsfähig mit dem Getriebezug (140) und dem Gasturbinentriebwerkseingangselement (20) koppelbar ist, wobei das Ausgangselement (170) ausgelegt ist, um ein Drehmoment vom Getriebezug (140) auf das Gasturbinentriebwerkseingangselement (20) zu übertragen; und
ein Motorsystem (115), das von der Stützstruktur (117) getragen wird, wobei das Motorsystem (115) einen Motor (130) und ein Motorausgangszahnrad (134) einschließt, wobei das Motorausgangszahnrad (134) ausgelegt ist, um in das integrierte Eingangszahnrad (150) zur selektiven Abgabe des Motordrehmoments vom Motor (130) an das integrierte Eingangszahnrad (150) einzugreifen, so dass das Motordrehmoment auf das Ausgangselement (170) übertragen und an das Gasturbinentriebwerkseingangselement (20) abgegeben wird;
wobei das integrierte Eingangszahnrad (150) ein Hohlrad (148) des Planetenradsatzes des Getriebezugs (140) ist;
wobei der Planetenradsatz eine Vielzahl von Planetenrädern (144) einschließt, die mit einem Innendurchmesserteil (149) des Hohlrads (148) in Eingriff stehen; und
wobei das Motorausgangszahnrad (134) ausgelegt ist, um in einen Außendurchmesserteil (152) des Hohlrads (148) einzugreifen.

2. Luftturbinenstarter (10) nach Anspruch 1, wobei das Motorsystem (115) eine Motorkupplung (154) einschließt, die ausgelegt ist, um eine Einweg-Drehmomentübertragung vom Motor (130) zum integrierten Eingangszahnrad (150) bereitzustellen.

3. Luftturbinenstarter (10) nach Anspruch 1, wobei das Motorausgangszahnrad (134) zwischen einer ersten Position und einer zweiten Position bewegbar ist;
wobei das Motorausgangszahnrad (134) in der ersten Position mit dem integrierten Eingangszahnrad (150) in Eingriff steht, um selektiv ein Motordrehmoment an das integrierte Eingangszahnrad (150) abzugeben;
wobei das Motorausgangszahnrad (134) in der zweiten Position mit dem integrierten Eingangszahnrad (150) außer Eingriff steht; und
ferner einen Aktuator (274) umfasst, der ausgelegt ist, um das Motorausgangszahnrad (134) selektiv zwischen der ersten Position und der zweiten Position zu bewegen.

4. Luftturbinenstarter (10) nach Anspruch 3, wobei der Aktuator (274) einen Magneten (276) einschließt.

5. Luftturbinenstarter (10) nach Anspruch 1, wobei das Motorsystem (115) ein zerbrechliches Element (156) einschließt;
wobei das zerbrechliche Element (156) eine erste Konfiguration aufweist, wenn eine Last auf dem zerbrechlichen Element (156) unter einem vorbestimmten Schwellenwert liegt, wodurch eine Drehmomentübertragung durch das Motorsystem (115) ermöglicht wird; und
wobei das zerbrechliche Element (156) eine zweite gebrochene Konfiguration aufweist, wenn die Last auf dem zerbrechlichen Element (156) über dem vorbestimmten Schwellenwert liegt, wodurch eine Drehmomentübertragung durch das Motorsystem (115) verhindert wird.

6. Luftturbinenstarter (10) nach Anspruch 1, ferner umfassend ein Schmiermittel (139), das in der Stützstruktur (117) enthalten ist;
und wobei das integrierte Eingangszahnrad (150) und mindestens ein Teil des Motorsystems (115) üblicherweise durch das Schmiermittel (139) geschmiert werden.

7. Luftturbinenstarter (10) nach Anspruch 6, wobei der mindestens eine Teil des Motorsystems (115) ein erster Teil des Motorsystems (115) ist; und
ferner umfassend eine Dichtung (141), die einen zweiten Teil des Motorsystems (115) im Wesentlichen gegen das Schmiermittel (139) abdichtet.

8. Luftturbinenstarter (10) nach Anspruch 1, wobei das Motorsystem (115) eine Motorwelle (132) einschließt, die vom Motor (130) drehbar angetrieben wird, und wobei das Motorsystem (115) einen Motorgetriebezug einschließt, der eine vorbestimmte Untersetzung zwischen der Motorwelle (132) und dem Motorausgangszahnrad (134) bereitstellt.

9. Luftturbinenstarter (10) nach Anspruch 1, wobei die Stützstruktur (117) eine erste Stützstruktur (112), die den Luftströmungsdurchgang (114) definiert, und eine zweite Stützstruktur (113) einschließt, die im Wesentlichen den Getriebezug (140) beherbergt; und
wobei das Motorsystem (115) an der zweiten Stützstruktur (113) montiert ist.

10. Luftturbinenstarter (10) nach Anspruch 1, wobei der Motor (130) ein Elektromotor ist.

11. Luftturbinenstarter (10) nach Anspruch 1, wobei das Motorsystem (115) ausgelegt ist, um einen Drehmomentweg zwischen dem Motor (130) und dem Gasturbinentriebwerkseingangselement (20) zu definieren;
ferner umfassend eine ATS-Kupplung (160), die entlang des Drehmomentwegs zwischen dem Motor (130) und dem Gasturbinentriebwerkseingangselement (20) angeordnet ist; und
wobei die ATS-Kupplung (160) ausgelegt ist, um eine Einweg-Drehmomentübertragung vom Motor (130) zum Gasturbinentriebwerkseingangselement (20) bereitzustellen.

12. Luftturbinenstarter (10) nach Anspruch 1, ferner umfassend eine Steuerung (155), die in funktionsfähiger Kommunikation mit dem Motor (130) steht;
wobei die Steuerung (155) ausgelegt ist, um ein Steuersignal zu erzeugen und das Steuersignal an den Motor (130) zu senden, um die Drehzahl des Motors (130) zwischen mindestens zwei Drehzahlen zu ändern.

13. Triebwerksystem, umfassend:
ein Gasturbinentriebwerk; und
den Luftturbinenstarter (10) nach Anspruch 1.

## Revendications

1. Démarreur de turbine à air (10) pour un moteur de turbine à gaz (14), le moteur de turbine à gaz (14) incluant un élément d'entrée de moteur de turbine à gaz (20), le démarreur de turbine à air (10) comprenant :
une structure de support (117) ;
un passage d'écoulement d'air (114) s'étendant au moins partiellement à travers la structure de support (117) ;
une turbine (122) qui est supportée par la structure de support (117) pour tourner par rapport à la structure de support (117), la turbine (122) étant configurée pour être entraînée en rotation en raison de l'air circulant à travers le passage d'écoulement d'air (114) ;
un train d'engrenages (140) qui est couplé de manière fonctionnelle à la turbine (122) et configuré pour recevoir l'entrée de couple de turbine depuis la turbine (122), le train d'engrenages (140) comprenant un ensemble d'engrenages planétaires qui inclut un engrenage d'entrée intégré (150) ;
un élément de sortie (170) qui est supporté par la structure de support (117) pour tourner par rapport à la structure de support (117), l'élément de sortie (170) pouvant être couplé de manière fonctionnelle au train d'engrenages (140) et à l'élément d'entrée de moteur de turbine à gaz (20), l'élément de sortie (170) étant configuré pour transférer un couple depuis le train d'engrenages (140) à l'élément d'entrée de moteur de turbine à gaz (20) ; et
un système de moteur (115) qui est supporté par la structure de support (117), le système de moteur (115) incluant un moteur (130) et un engrenage de sortie de moteur (134), l'engrenage de sortie de moteur (134) étant configuré pour venir en prise avec l'engrenage d'entrée intégré (150) pour délivrer sélectivement un couple moteur du moteur (130) à l'engrenage d'entrée intégré (150) de telle sorte que le couple moteur soit transféré à l'élément de sortie (170) et délivré à l'élément d'entrée de moteur de turbine à gaz (20) ;
dans lequel l'engrenage d'entrée intégré (150) est une couronne dentée (148) de l'ensemble d'engrenages planétaires du train d'engrenages (140) ;
dans lequel l'ensemble d'engrenages planétaires inclut une pluralité d'engrenages planétaires (144) qui sont en prise avec une partie de diamètre intérieur (149) de la couronne dentée (148) ; et
dans lequel l'engrenage de sortie de moteur (134) est configuré pour venir en prise avec une partie de diamètre extérieur (152) de la couronne dentée (148).

2. Démarreur de turbine à air (10) selon la revendication 1, dans lequel le système de moteur (115) inclut un embrayage de moteur (154) configuré pour fournir un transfert de couple unidirectionnel du moteur (130) à l'engrenage d'entrée intégré (150).

3. Démarreur de turbine à air (10) selon la revendication 1, dans lequel l'engrenage de sortie de moteur (134) est mobile entre une première position et une seconde position ;
dans lequel, dans la première position, l'engrenage de sortie de moteur (134) est en prise avec l'engrenage d'entrée intégré (150) pour délivrer sélectivement un couple moteur à l'engrenage d'entrée intégré (150) ;
dans lequel, dans la seconde position, l'engrenage de sortie de moteur (134) est désengagé de l'engrenage d'entrée intégré (150) ; et
comprenant en outre un actionneur (274) configuré pour déplacer sélectivement l'engrenage de sortie de moteur (134) entre la première position et la seconde position.

4. Démarreur de turbine à air (10) selon la revendication 3, dans lequel l'actionneur (274) inclut un solénoïde (276).

5. Démarreur de turbine à air (10) selon la revendication 1, dans lequel le système de moteur (115) comprend un élément cassable (156) ;
dans lequel l'élément cassable (156) a une première configuration lorsqu'une charge sur l'élément cassable (156) est inférieure à un seuil prédéterminé, permettant un transfert de couple à travers le système de moteur (115) ; et
dans lequel l'élément cassable (156) a une seconde configuration fracturée lorsque la charge sur l'élément cassable (156) est supérieure au seuil prédéterminé, empêchant un transfert de couple à travers le système de moteur (115).

6. Démarreur de turbine à air (10) selon la revendication 1, comprenant en outre un lubrifiant (139) contenu dans la structure de support (117) ;
et dans lequel l'engrenage d'entrée intégré (150) et au moins une partie du système de moteur (115) sont généralement lubrifiés par le lubrifiant (139).

7. Démarreur de turbine à air (10) selon la revendication 6, dans lequel l'au moins une partie du système de moteur (115) est une première partie du système de moteur (115) ; et
comprenant en outre un joint (141) qui scelle sensiblement une seconde partie du système de moteur (115) du lubrifiant (139).

8. Démarreur de turbine à air (10) selon la revendication 1, dans lequel le système de moteur (115) inclut un arbre de moteur (132) qui est entraîné en rotation par le moteur (130), et dans lequel le système de moteur (115) inclut un train d'engrenages de moteur qui fournit une réduction d'engrenage prédéterminée entre l'arbre de moteur (132) et l'engrenage de sortie de moteur (134).

9. Démarreur de turbine à air (10) selon la revendication 1, dans lequel la structure de support (117) inclut une première structure de support (112) qui définit le passage d'écoulement d'air (114) et une seconde structure de support (113) qui abrite sensiblement le train d'engrenages (140) ; et
dans lequel le système de moteur (115) est monté sur la seconde structure de support (113).

10. Démarreur de turbine à air (10) selon la revendication 1, dans lequel le moteur (130) est un moteur électrique.

11. Démarreur de turbine à air (10) selon la revendication 1, dans lequel le système de moteur (115) est configuré pour définir un trajet de couple entre le moteur (130) et l'élément d'entrée de moteur de turbine à gaz (20) ;
comprenant en outre un embrayage ATS (160) disposé le long du trajet de couple entre le moteur (130) et l'élément d'entrée de moteur de turbine à gaz (20) ; et
dans lequel l'embrayage ATS (160) est configuré pour fournir un transfert de couple unidirectionnel du moteur (130) à l'élément d'entrée de moteur de turbine à gaz (20).

12. Démarreur de turbine à air (10) selon la revendication 1, comprenant en outre un dispositif de commande (155) qui est en communication fonctionnelle avec le moteur (130) ;
dans lequel le dispositif de commande (155) est configuré pour générer un signal de commande et transmettre le signal de commande au moteur (130) pour changer la vitesse du moteur (130) entre au moins deux vitesses.

13. Système de moteur comprenant :
un moteur de turbine à gaz ; et
le démarreur de turbine à air (10) selon la revendication 1.
